# EUROPEAN PATENT APPLICATION

(11) **EP 4 559 713 A1**
(43) Date of publication of application: **28.05.2025**
(21) Application number: 24214540.7
(22) Date of filing: 21.11.2024
(51) Int. Cl.: B60K 17/22, B62D 21/02, B60K 17/04, B60K 17/346, B60K 17/34, F16H 57/037, F16H 57/02, B60K 17/16, F16H 48/05, F16H 48/24, F16H 48/08

(54) **IMPROVED TORQUE DISTRIBUTION SYSTEM FOR A VEHICLE**

(30) Priority: 23.11.2023 IT 202300024930
(71) Applicant: IVECO S.P.A., 10156 Torino (IT)
(72) Inventor: PEREIRA DE LEMOS, Josè Francivaldo, 10156 TORINO (IT); LIGA, Valerio, 10156 TORINO (IT)
(74) Representative: Studio Torta S.p.A.

(57) **Abstract**

A vehicle (1) of a special type comprising a chassis (2) movable on the ground via a plurality of wheels (8), the chassis comprising a pair of spars (3', 3") extending parallel to a longitudinal axis (A) of the vehicle (1), the vehicle (1) comprising an engine module (5) configured to provide torque to the plurality of wheels (8) and a distribution system (7) operationally connected between the engine module (5) and the plurality of wheels (8) to distribute the torque, the distribution system (7) comprising an axle (6) and a first and a second branch (7', 7''), the axle (6) comprising a pair of drive axles (27', 27¹¹) operationally connected to an input shaft (13) driven by the engine module (5), the first and second branches (7', 7") each driven by a respective one of drive axles (27', 27"), and extending along respective axes (A', A") parallel to and spaced from the longitudinal axis (A) and each being placed adjacent to and internally with respect to a respective spar (3', 3¹¹).

## Description

### CROSS-REFERENCE TO RELATED APPLICATIONS

This patent application claims priority from Italian patent application no. 102023000024930 filed on November 23, 2023, the content of which is incorporated herein by reference.

### TECHNICAL SECTOR

The present invention relates to a torque distribution system for a vehicle, in particular a torque distribution system for a heavy vehicle such as a rescue, military or fire-fighting vehicle, in particular a hybrid vehicle.

### BACKGROUND

Heavy-duty type special vehicles such as fire-fighting, military or rescue vehicles require a distribution of torque to the wheels in a high operating range.

In fact, it is known that such vehicles must operate under extremely variable ground and/or load conditions depending on the conditions of use.

Still, it is known that hybrid type vehicles are increasingly used, i.e. comprising electric machines configured to provide or absorb torque with respect to the transmission to allow vehicular movement or generate electrical energy.

The arrangement of the transmission elements, in particular even further in the case of a hybrid vehicle, clearly reduces the useful spaces of the vehicle.

In particular, it is known that in the special type vehicles, the space between the spars is used to house provisions of the vehicle itself of the special type such as boxes, housings, operating elements, etc.

Therefore, the housing of the transmission elements, in particular in the case of a hybrid vehicle, makes it necessary to make compromises between the useful space and the versatility of the torque distribution range.

It is therefore felt the need to provide a torque distribution system to solve the above problems; in particular, a distribution system that is compact and provides torque in a high operating range of the vehicle.

Aim of the present invention is to meet the aforementioned needs in an optimized and economical manner.

### SUMMARY OF THE INVENTION

The above aim is achieved by a vehicle as claimed in the appended claims which form an integral part of the present description.

### BRIEF DESCRIPTION OF THE DRAWINGS

For a better understanding of the present invention, a preferred embodiment is described below, by way of nonlimiting example, with reference to the accompanying drawings, wherein:
- Figure 1 is a schematic plan view of a vehicle comprising a first embodiment of the distribution system according to the present invention;
- Figure 2 is a schematic plan view of a vehicle comprising a second embodiment of the distribution system according to the present invention;
- Figure 3 is a schematic plan view of a vehicle comprising a third embodiment of the distribution system according to the present invention;
- Figure 4 is a schematic sectional view of an axle of the distribution system according to the invention;
- Figure 5 is a schematic sectional view of a first embodiment of a portion of the distribution system according to the invention;
- Figure 6 is a schematic sectional view of a second embodiment of a portion of the distribution system according to the invention; and
- Figure 7 is a schematic sectional view of a first embodiment of a portion of the distribution system according to the invention.

### DETAILED DESCRIPTION OF THE INVENTION

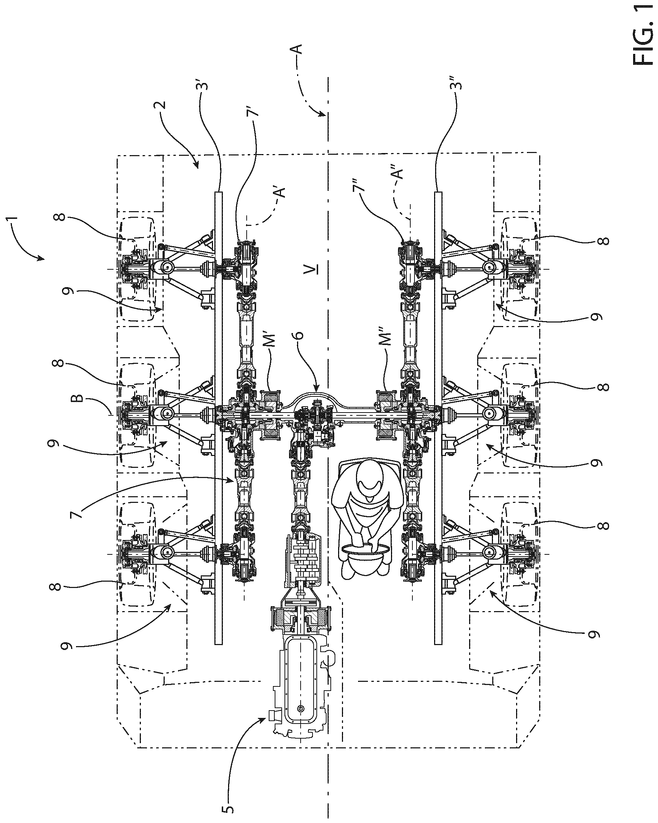

Figure 1 shows a vehicle 1 of a special type, such as a fire-fighting, military, emergency heavy vehicle, including a chassis 2 extending along an axis A and provided with a pair of spars 3', 3" extending parallel to the axis A and spaced from it.

Vehicle 1 also includes an engine module 5, advantageously an internal combustion engine and a distribution system 7 configured to operationally connect engine module 5 to a plurality of wheels 8 carried by chassis 2.

In detail, vehicle 1 also comprises an axle 6 rigidly connecting spars 3', 3" to each other and forming part of distribution system 7.

Advantageously, vehicle 1 is of the hybrid type and comprises at least one electric machine M', M", in the case described two electric machines M', M", operationally interposed between engine module 5, distribution system 7 and wheels 8. In the embodiment described, electric machines M', M" are carried by axle 6.

In particular, electric machines M' , M" are electrically connected, by cable or wireless, to an energy storage system of vehicle 1, not depicted, such as vehicular batteries, configured to exchange energy with electric machines M', M", respectively to supply it or to store it depending on the operation of electric machines M', M" by engine, i.e. using electrical energy to produce torque or vice versa from generators.

Advantageously, moreover, each wheel 8 is carried by a respective suspension system 9 made externally to respective spar 3', 3". Each suspension system 9 is advantageously operationally separated from the other so that each wheel 8 is independent in movement from the others.

In particular, it is noted that engine module 5 is placed in front along the axis A and axle 6 is placed at the back adjacent thereto so as to leave a rear space V between spars 3' . 3".

With reference to the longitudinal axis A, said rear free space V is transversely delimited by spars 3', 3'', in front delimited by axle 6 and open at the back.

In detail, a first pair of wheels 8 is directly connected to axle 6, a second pair of wheels 8 is placed in front of the first pair of wheels 8 and the remaining pairs of wheels 8 are placed at the back of the second pair of wheels 8.

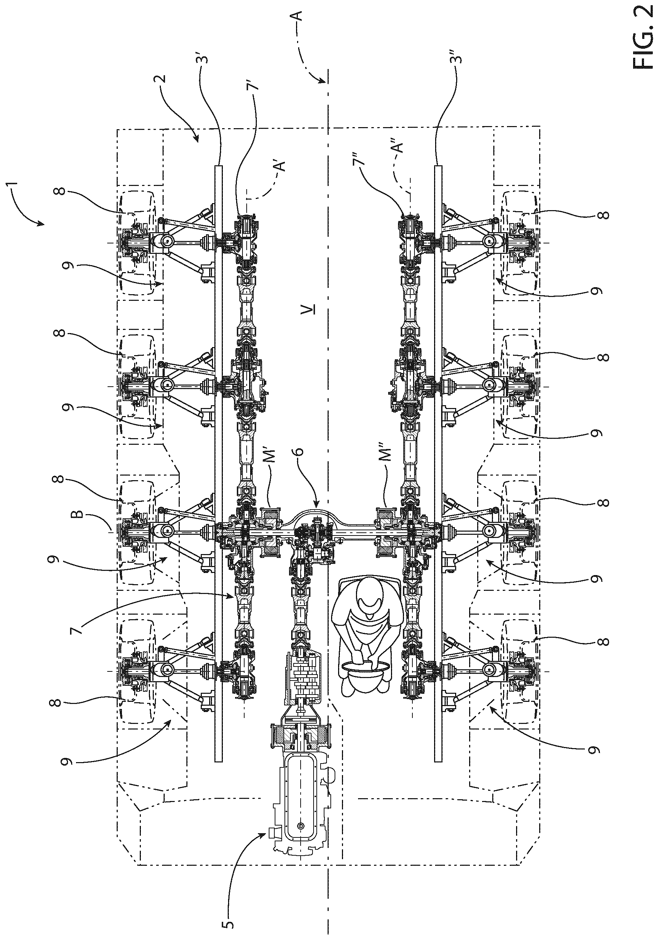

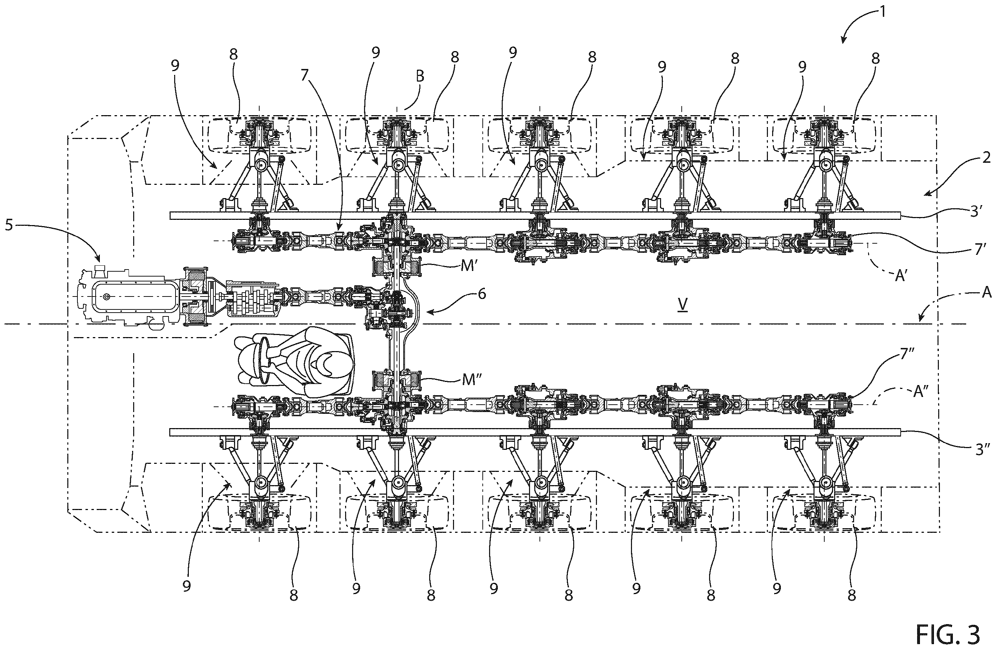

In the embodiment of Figure 1 there is a third pair of rear wheels 8, in the embodiment of Figure 2 there are a third and a fourth pair of rear wheels 8 one at the back of the other and in the embodiment of Figure 3 there are a third, a fourth and a fifth pair of rear wheels 8 one at the back of the other.

Consequently, between the embodiments of Figures 1, 2 and 3, the extension along the axis A of the rear free space V varies.

In particular, distribution system 7 comprises a first and a second branch 7', 7" extending along respective axes A', A" parallel to the longitudinal axis A, therefore to first and to second spar 3', 3" and operationally connected to axle 6 so as to define with this an "H" shape configured to receive torque from engine module 5, and advantageously from the at least one electric machine M', M" and exchange this torque with wheels 8 as described below.

It is noted how the control seat of vehicle 1 can advantageously be placed anteriorly with respect to axle 6 in greater detail between engine module 5 and distribution system 7 so as to leave the portion of vehicle behind axle 6 completely free.

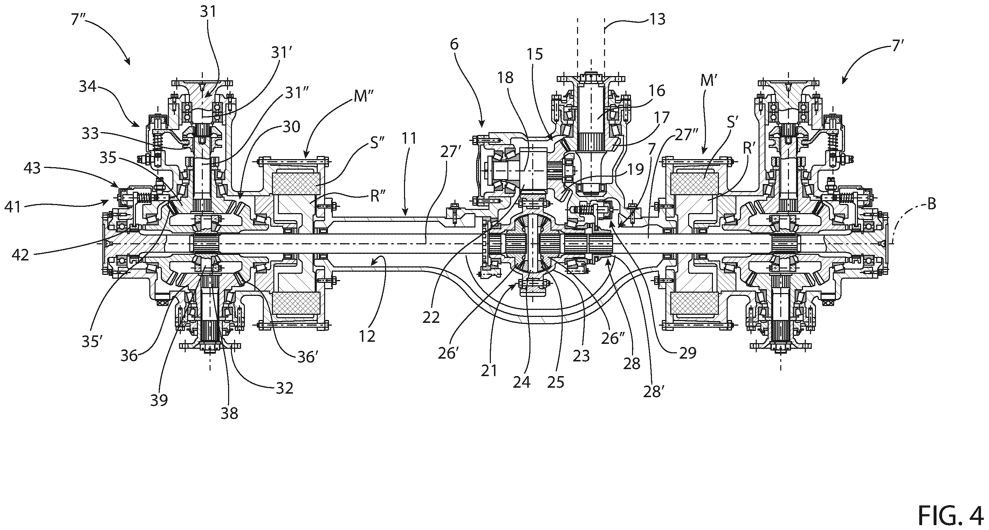

In Figure 4 axle 6 of the distribution system according to the invention is shown in detail.

Axle 6 comprises a housing 11 extending along an axis B transverse to the axis A and advantageously connecting spars 3', 3'', and defining a space 12 housing part of distribution system 7.

In detail, distribution system 7 comprises an input shaft 13 carried by the engine system and configured to provide torque via a first transfer system 21 and a second transfer system 21 to a pair of drive axles 27', 27" operationally connected to the second pair of wheels 8, as described below.

Advantageously both first and second transfer systems 13, 21 are reducer systems.

In detail, first transfer system 13 comprises a first shaft 16 rigidly connected to input shaft 13 and connected via a gear to a support shaft 18. Advantageously, the gear is a bevel type gear and comprises a first gear wheel 17 rigidly carried by first shaft 16 and a second gear wheel 19 carried by support shaft 18 and meshing with first gear wheel 17.

Support shaft 18, rotatably carried by housing 11, is operationally connected to drive axles 27', 27" via second transfer system 21, configured as a differential system.

In detail, said differential system 21 comprises a planetary carrier 23 meshing with a gear wheel 22 rigidly carried by support shaft 18 and driving a pin 24, advantageously a cross pin, adapted to bring a plurality of satellites 25 free to rotate on it.

Satellites 25 are configured to mesh with a first and a second gear wheel 26', 26'', advantageously conical, carried by respective ends of drive axles 27', 27".

Preferably, distribution system 7 comprises locking means 28 of differential system 21 configured to lock the operation of differential transfer system 21, i.e. by rotating gear wheels 26', 26" at the same speed.

In detail, said locking means 28 comprise a sleeve 28' carried by drive axle 27" and configured to slide on it along its longitudinal axis between a position of non-coupling one of gear wheels 26', 26'' and a coupling position that makes this and drive axle 27" integral with each other.

Locking means 28 are actuated by actuator means 29. Still in the embodiment described, actuator means 29 are of pneumatic type and not further described for brevity's sake.

The opposite ends of drive axles 27', 27" are connected to wheels 8 as detailed below, as well as via a transfer system 30, with differential, to first and second branches 7', 7" of distribution system 7 at an intermediate point with respect to their ends and advantageously to electric machines M', M'' further placed internally with respect to differential transfer system 30.

For the sake of brevity, reference is made below only to the connection with second branch 7", the other being mirrored and made similarly.

In detail, differential transfer system 30 is configured to operationally connect drive axle 27' to a first and a second output shaft 31, 32 configured to be connected respectively in front and at the back along second branch 7'' and provide torque to other wheels 8 of vehicle 1.

In detail, first and second output shafts 31, 32 each carries a wheel 35, 36 configured to mesh with respective output wheels 35', 36' of differential transfer system 30.

The latter comprises in detail a plurality of satellites 39 carried by respective pins 38 meshing with drive axle 27' and connected by a rotating planetary carrier. Satellites 39 also mesh with the aforementioned gear wheels 35', 36' carried rotationally free between housing 11 and drive axle 27' .

Note, in detail, how first and second output shafts 31, 32 are not coaxial so that gear wheels 35', 36' can mesh with respective gear wheels 35.

Advantageously, first output shaft 31 is made of two portions 31', 31" selectively connectable to each other. In particular, distribution system 7 comprises selector means 33 configured to allow selective coupling between the two portions 31', 31'' . Advantageously, distribution system 7 comprises actuation means 34 configured to move selector means 33 to allow or not the coupling of the two portions 31', 31".

Advantageously in the form described, said selector means 33 comprise a sleeve carried by one of two portions 31', 31'' and configured to slide on it along its longitudinal axis between a position of non-coupling with other portion 31', 31'' and a coupling position that makes two portions 31', 31" integral with each other. Still in the embodiment described, actuator means 34 are of pneumatic type and not further described for brevity's sake.

Preferably, distribution system 7 comprises locking means 40 of the differential system configured to lock the operation of differential transfer system 30, i.e. by rotating gear wheels 35', 36' at the same speed.

In detail, said locking means 40 comprise a sleeve 41 carried by drive axle 27' and configured to slide on it along its longitudinal axis between a position of non-coupling one of gear wheels 35', 36 and a coupling position that makes this and drive axle 27' integral with each other.

Locking means 40 are actuated by actuator means 42. Still in the embodiment described, actuator means 42 are of pneumatic type and not further described for brevity's sake.

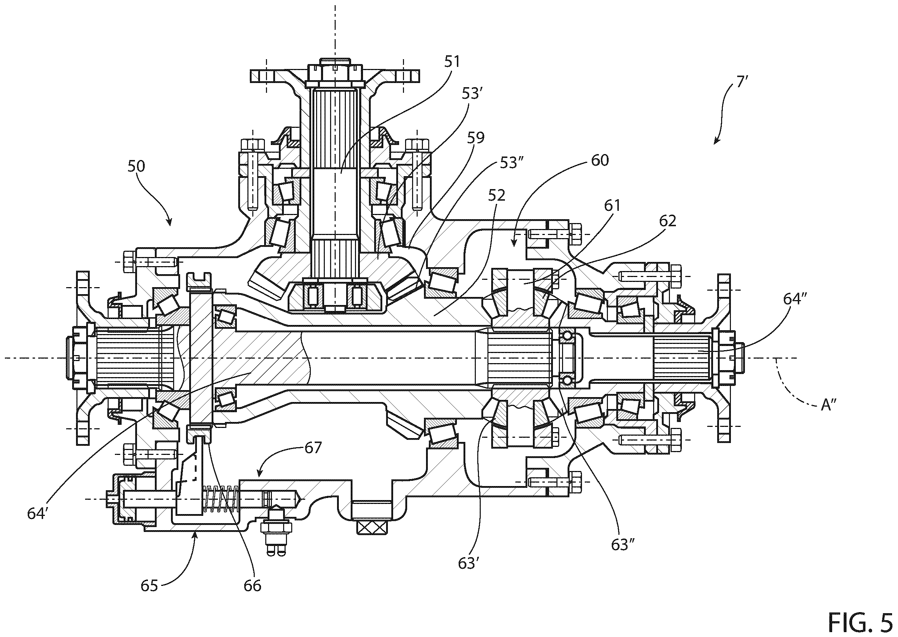

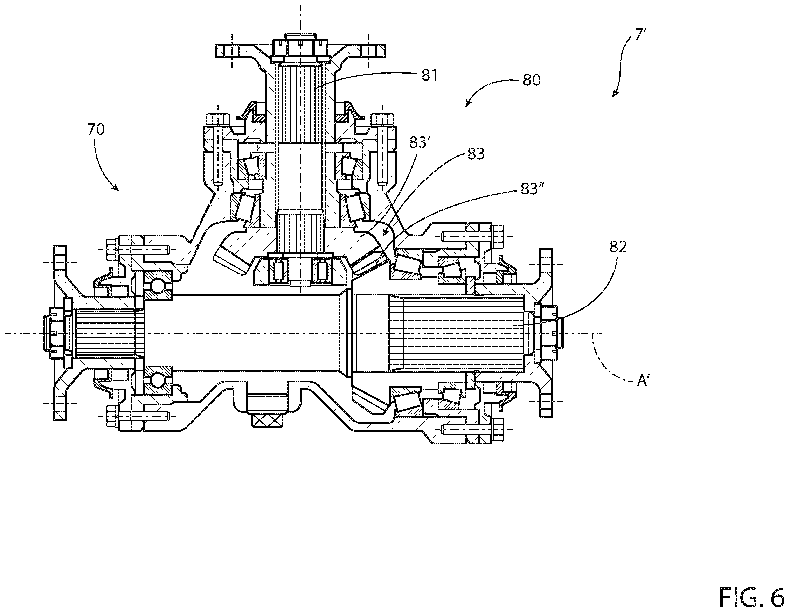

Figures 5 and 6 show two connection assemblies 50, 70 configured to connect a wheel 8 along a respective branch 7' , 7" .

Figure 5 shows a first connection assembly 50 comprising a differential transfer system 60 configured to connect together a first and a second shaft 64', 64'' forming part of branch 7', 7'' with a wheel shaft 51 connected to a wheel 8.

First and second shafts 64', 64'' are advantageously connected to one of first and second shafts 31, 32 of axle 6 or to other first and second shafts 64', 64'' of a further connection assembly 50.

In particular, differential transfer system 60 comprises a first gear wheel 63' and a second gear wheel 63'' respectively one integral with a support shaft 52 and one integral with second shaft 64". Differential transfer system 60 further comprises a plurality of pins 61, connected to each other by a movable planetary carrier, each supporting a respective satellite 62 configured to mesh with aforesaid first and second gear wheels 63', 63". Pins 61 are also configured to mesh with first shaft 64'.

Preferably, distribution system 7 comprises locking means 65 of the differential system configured to lock the operation of differential transfer system 60, i.e. by rotating shafts 52 and 64'' at the same speed.

In detail, said locking means 65 comprise a sleeve 66 carried by shaft 64' and configured to slide on it along its longitudinal axis between a position of non-coupling the shaft 52 and a coupling portion that makes this and shaft 64' integral with each other.

Locking means 65 are actuated by actuator means 67. Still in the embodiment described, actuator means 67 are of pneumatic type and not further described for brevity's sake.

Support shaft 52 is operationally connected to wheel shaft 51 via a gear 53, for example a bevel gear comprising a first gear wheel 52' integral with wheel shaft 51 and a second gear wheel 53" integral with support shaft 52.

Figure 6 shows a second connection assembly 70 configured to connect a wheel shaft 81 connected to a wheel 8 and a rotating shaft 82 forming part of branch 7', 7".

In particular, rotating shaft 82 is operationally connected to wheel shaft 81 via a transfer system 80 with gear 83, for example a bevel gear comprising a first gear wheel 83' integral with wheel shaft 81 and a second gear wheel 83" integral with rotating shaft 82.

In particular, first connection assembly 50 may be provided between branch 7', 7'' and first wheels 8 and last wheels 8 posteriorly with respect to axle 6 i.e. the third pairs of wheels in the embodiment of Figure 1, the fourth pair of wheels in the embodiment of Figure 2 or the fifth pair of wheels in the embodiment of Figure 3 and the second connection assembly 70 may be provided between branch 7', 7'' and the third pair of wheels in the embodiment of Figure 2 or the third and fourth pair of wheels in the embodiment of Figure 3.

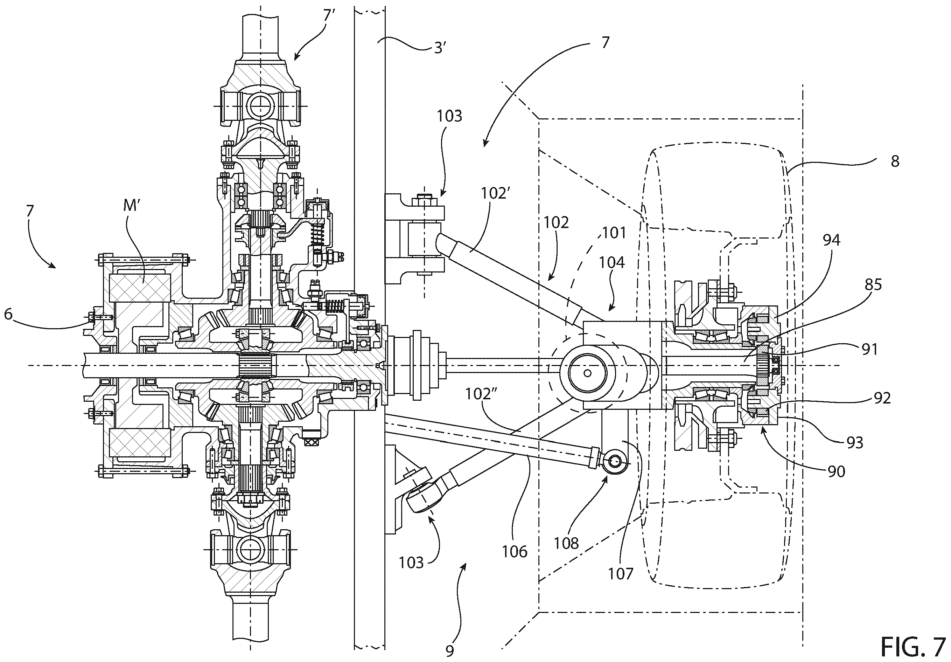

As best visible in Figure 7, distribution system 7 also comprises a transfer system 90 operationally interposed between an input shaft 85 to a wheel 8 and its hub so as to vary its torque/speed.

In particular, according to what is depicted in Figure 7, input shaft 85 is carried by drive axle 27'' of Figure 4. Clearly, transfer system 90 can be made in any wheel 8 of vehicle 1.

Advantageously, transfer system 90 is of the epicyclic type and comprises a sun gear 91 rigidly carried by input shaft 85, a plurality of satellites 92 meshing with the sun gear and carried by respective pins 92 integral with a planetary carrier 93 rigidly carried by the hub of wheel 8.

Still referring to Figure 7, an exemplary embodiment of suspension system 9 for wheel 8 is shown in detail. As already mentioned, suspension system 9 connects a wheel 8 independently of the others to chassis 2 and externally to spars 3', 3".

In the embodiment described, suspension system 9 comprises an elastic device 101 configured to connect the hub of wheel 8 to a portion of chassis 2 to absorb a force acting on a vertical axis (i.e. perpendicular to the axes A, B), such as a hydraulic cylinder or a gas spring or a helical spring.

Furthermore, suspension system 9 comprises a retention element 102 configured to limit longitudinal and transverse movements of the hub of wheel 8 allowing a vertical movement thereof.

In detail, retention element 102 comprises a V-shaped element, advantageously with the tip facing away with respect to chassis 2, i.e. with the vertex at the hub of wheel 8 and therefore comprising a first rod 102' and a second rod 102'' joined together in a "V" shape.

Rods 102', 102" are respectively connected to their ends by respective movable connections 103, 104 such as hinges configured to allow a rotation about axes contained in a plane of the axes A, B, i.e. allowing a movement along the vertical axis of the wheel hub 8.

As can be seen from the drawings, vehicle 1 also comprises a steering system 105, optionally provided with each wheel 8 and configured to allow it to rotate around the aforementioned vertical axis. Such steering system 105 may comprise an arm 106 adapted to act on one end of a steering knuckle 107 of the hub of wheel 8, as per se known and not further described.

The operation of the distribution system and vehicle according to the invention described above is as follows.

In a first operating condition, purely with traction drive via engine module 5, the torque is provided by this towards axle 6 and primarily distributed to drive axles 27', 27". In particular, this distribution is carried out through first transfer system 14 which varies the torque/speed to the second differential transfer system 21 which allows the torque to be provided, optionally at different relative speeds, to drive axles 27', 27". From these, the torque is provided to the second pair of wheels 8 and via shafts 31, 32 towards branches 7', 7" of distribution system 7, i.e. towards the pair of front wheels and towards the at least one pair of rear wheels. In particular, thanks to selector means 33 it is possible to connect or not the front wheels in a configuration with all drive wheels. Still, it is possible or not to lock the differential function of differentials 21, 30 via respective locking systems 29, 41. Once the torque is provided to branch 7 it is transferred through one of connection assemblies 50, 70 described above, therefore distributed between a connecting shaft 64' and a subsequent shaft 64" and rotating shaft 51 connected to a wheel 8 via a differential system 60 (as in the connection assembly 50 of Figure 5) or directly via a gear 83 (as in the connection assembly 70 of Figure 6). Furthermore, each wheel 8 is connected to respective input shaft 85 via mechanism 90 which varies torque and speed via the passage between sun gear 91, satellites 92 and planetary carrier 94 which is integral with the wheel hub.

In a second operating, boost, condition, electric machines M', M" can lie, one or both, on drive axles 27', 27" providing additional torque to at least one of branches 7', 7". The path of the torque along distribution system 7 is not traced again, for brevity's sake being analogous.

In a third operating, charging, condition, electric machines M', M" receive torque from branches 7', 7'' due to the dragging of the vehicle, with a reverse torque path similar to the previous one and therefore not described for brevity's sake, thus braking a pair of drive axles and braking vehicle 1.

From the foregoing, the advantages of a wheel hub for a vehicle axle comprising an integrated reduction system according to the invention are evident.

Thanks to the proposed system that defines an "H" shape, it is possible to provide a useful rear space that allows vehicle 1 to obtain great versatility and therefore to be adoptable in different emergency, fire-fighting and military configurations.

In particular, thanks to its composition, chassis 2 is particularly robust and compact. Furthermore, its integration with distribution system 7 makes it possible to keep the latter protected from any impacts or collisions from the external environment by being protected by spars 3 or by axle 6.

Still, distribution system 7 thanks to the distribution to any wheel 7 independently of the others and thanks to independent suspension system 9 essentially allows to provide a vehicle usable in any ground condition, even off-road, in conditions of mud or debris as the torque can be easily distributed where necessary and where the wheels can move relative to the chassis freely with respect to each other.

In particular, the above is synergistically reinforced by the presence of multiple differential blocks and front drive wheel connection systems for "all drive wheels" configuration.

Thanks to the fact that the torque can be provided by the engine module or by electric machines M', M", it is possible to provide both an emergency redundancy system if one of the engine module or electric machines M', M" has a malfunction, a boost system and an energy recovery braking system.

The applications and versatility of the vehicle are therefore increased as well as its consumption reduced.

Finally, it is clear that modifications and variants can be made to the wheel hub of vehicle axle comprising an integrated reduction system according to the present invention which, however, do not fall outside the scope of protection defined by the claims.

Clearly, the systems of gear, differentials, selectors and differential blocks and respective actuators can be made differently.

Still, the expected shapes and the number of pairs of wheels may vary. In addition, as mentioned, the vehicle can be of any type for special use.

Still, clearly, mechanical connection elements or rolling supports or lubrication elements not per se pertinent to the present inventions and clear to a person skilled in the art and not mentioned for brevity's sake may have been omitted in the description.

Likewise, the types of gear wheels and the number of their teeth have not been indicated and may vary for this purpose.

## Claims

1. Vehicle (1) of a special type comprising a chassis (2) movable on the ground via a plurality of wheels (8), said chassis comprising a pair of spars (3', 3'') extending parallel to a longitudinal axis (A) of said vehicle (1), said vehicle (1) comprising an engine module (5) configured to provide torque to said plurality of wheels (8) and a distribution system (7) operationally connected between said engine module (5) and said plurality of wheels (8) to distribute said torque, said distribution system (7) comprising an axle (6) and a first and a second branch (7', 7"), said axle (6) comprising a pair of drive axles (27', 27") operationally connected to an input shaft (13) driven by said engine module (5), said first and said second branches (7', 7") each driven by a respective of said drive axles (27', 27"), said first and second branches extending along respective axes (A', A") parallel and spaced from said longitudinal axis (A), said first and second branches (7', 7") each being placed adjacent and internally to a respective spar (3', 3"),
wherein said drive axles (27', 27") are operationally connected to the respective branch (7', 7") via a differential system (30) configured to allow a different driving speed rotation between a first and a second connecting shaft (31, 32) of said branches (7', 7").

2. Vehicle according to claim 1, wherein said engine module (5) is placed anteriorly with respect to said longitudinal axis (A) with respect to said axle (6).

3. Vehicle according to claim 2, wherein said drive axles (27', 27") are operationally connected to a second pair of wheels (8), said vehicle further comprising a first pair of wheels (8) driven by said first and second branch (7', 7") and placed anteriorly with respect to said axle (6) .

4. Vehicle according to claim 3, wherein said vehicle (1) can assume one of the following three configurations:
- in a first configuration it includes a third pair of wheels (8) driven by said first and second branches (7', 7"); or
- in a second configuration it includes a third and a fourth pair of wheels (8) driven by said first and second branches (7', 7"); or
- in a third configuration it includes a third, a fourth and a fifth pair of wheels (8) driven by said first and second branches (7', 7").

5. Vehicle according to one of claims 1 to 4, wherein said vehicle (1) defines a free space (V) transversally delimited by said branches (7', 7") and longitudinally delimited by said axle (6) and open at the back.

6. Vehicle according to one of claims 1 to 5, further comprising at least one electric machine (M' , M") operationally connected to said drive axles (27', 27") upstream of said branches (7', 7").

7. Vehicle according to one of the previous claims, wherein said axle (6) includes a housing (11) defining a space (12) housing said drive axle (27', 27") and connecting said spars (3', 3").

8. Vehicle according to one of the previous claims, wherein said distribution system (7) includes a first transfer system (14) and a second transfer system (21) operationally interposed between said input shaft (13) and said drive axle (27', 27"), said first transfer system (14) comprising a gear, said second transfer system (21) being a differential system, driven by one of the gear wheels of said first transfer system gear (14).

9. Vehicle according to one of the previous claims, wherein said first connecting shaft (31) is made in two portions (31', 31") selectively connectable to each other via selector means (33).

10. Vehicle according to claim 8 or 9, wherein said differential system (30) includes pins (39) supporting a plurality of satellites (38) meshing with respective gear wheels (35', 36') meshing with respective gear wheels (35, 36) integral with said first and a second connecting shaft (31, 32), said pins (39) being driven by a respective drive axle (27', 27").

11. Vehicle according to claim 6, wherein said at least one electric machine (M', M") is interposed between said drive axle (27', 27") between said second transfer system (21) and said differential system (30).

12. Vehicle according to one of the previous claims, wherein said distribution system (7) includes a first connection assembly (50) to connect one of said wheels (8) to said transmission branch (7', 7"), said first connection assembly (50) comprising a differential mechanism (60).

13. Vehicle according to claim 12, wherein said differential mechanism (60) includes a plurality of pins (61) driving satellites (62) operationally connected to a wheel shaft (51) and to a second shaft (64") of said branch (7', 7"), said pins (61) being dragged by a first shaft (64') of said branch (7', 7").

14. Vehicle according to claim 13, wherein said satellites (62) mesh with a support shaft (52) operationally connected to said wheel shaft (51) via a gear (53).

15. Vehicle according to one of the previous claims, wherein said distribution system (7) includes a second connection assembly (70) to connect one of said wheels (8) to said transmission branch (7', 7"), said second connection assembly (70) comprising a gear transfer system (80).

16. Vehicle according to claims 12 and 15 in combination with claim 4, wherein:
- in said first configuration said third pair of wheels (8) is connected to said branch (7', 7") via said first connection assembly (50) and said first pair of wheels (8) is connected to said branch (7', 7") via said second connection assembly (70);
- in said second configuration said third pair of wheels (8) is connected to said branch (7', 7") via said first connection assembly (50), said first and said fourth pair of wheels (8) are connected to said branch (7', 7") via said second connection assembly (70);
- in said third configuration said third and fourth pairs of wheels (8) are connected to said branch (7', 7") via said first connection assembly (50), said first and said fifth pairs of wheels (8) are connected to said branch (7', 7") via said second connection assembly (70).

17. Vehicle according to one of the previous claims, wherein said differential systems (21, 30, 60) include differential locking systems.

18. Vehicle according to one of the previous claims, wherein each wheel (8) is supported by a respective suspension system (9) independent of every other wheel (8).

19. Vehicle according to claim 18, wherein said suspension system (9) is placed externally to said spars (3', 3") and includes a vertical retention element (101) and a longitudinal and transversal retention element (102) operationally connecting a hub of said wheel (8) to said spar (3', 3'').

20. Vehicle according to any of the previous claims, wherein said wheels (8) are driven by a respective shaft (27', 27", 85), said wheels (8) comprising an epicyclic transfer system (90) operationally connecting said shaft (27', 27", 85) to the hub of said wheels (8).
